# FASCICULE DE BREVET EUROPEEN

(11) **EP 1 942 635 B1**
(45) Date de publication et mention de la délivrance du brevet: **20.02.2013**
(21) Numéro de dépôt: 07291639.8
(22) Date de dépôt: 28.12.2007
(51) Int. Cl.: H04L 29/08, H04M 1/725

(54) **Procédé d'exploitation d'un service par un système hôte à interface homme-machine et le système hôte**
Verfahren zur Nutzung eines Dienstes über ein Hostsystem mit Mensch-Maschinen-Schnittstelle, und das Hostsystem
Method for use of a service by a host system comprising a human-machine interface and the host system

(30) Priorité: 05.01.2007 FR 0700058
(43) Date de publication de la demande: 09.07.2008
(73) Titulaire: Continental Automotive France, 31100 Toulouse (FR)
(72) Inventeur: Gaborit, David, 06530 Tignet (FR); Lee, Richard, 06620 Pont Du Loup (FR); Wild, Chris, 06650 Le Rouret (FR); Grant, Marc, 06620 Bar Sur Loup (FR); Fava-Rivi, Christophe, 06200 Nice (FR)

(56) Documents cités:
- WO-A-2006/063602
- WO-A-2006/067541

## Description

La présente invention concerne les interfaces homme machine (IHM ou MMI/HMI pour « man/human machine interface ») utilisés tant pour des services distants offerts par des opérateurs que pour des services résidents (« stand alone »), sur des appareils ou dispositifs électroniques mobiles encore appelés CED (« consumer electronic device ») et sur des stations informatiques fixes ou autres bases radio assimilables à des stations fixes.

Les CED peuvent être des téléphones mobiles, des ordinateurs portables (« laptop »), des assistants personnels (ou PDA pour « personal digital assistant »), des navigateurs GPS (« global positioning system »), des baladeurs ou autres lecteurs audio MP3 (comme ceux de la marque protégée « iPod »), etc.

Les téléphones mobiles peuvent avoir accès eux-mêmes à divers types de services offerts par des opérateurs, services tels que de diffusion d'informations de navigation routière, de trafic, touristiques, météorologiques, de réservation, de dépannage, commerciales ou boursières, etc ...

Les stations fixes peuvent être des ordinateurs de bureau (PC « personal computer » ou autres) notamment à applications multimédia, des bases domotiques (radio ou à courants porteurs) servant au contrôle des équipements automatisés de la maison (multimédia, chauffage ou climatisation, fermetures diverses, ...) ou des bases téléphoniques fixes (filaires ou sans fil telles que bases téléphoniques DECT) ou embarquées, telles que les radio-téléphones des véhicules automobiles.

Comme les CED sont des appareils mobiles, ils sont nécessairement de taille très réduite et ne disposent que d'une IHM insuffisante pour des applications multimédia ou Internet (réseau WAP) ou même courrier électronique : écrans miniatures, interfaces d'entrée inappropriées, transducteurs sonores de mauvaise qualité audio, montages mécaniques du boîtier et fonctionnalités de l'appareil mal adaptés, etc ...

Par contre, les dimensions des stations fixes ne sont pas limitées. Les stations peuvent donc être pourvues d'une IHM ergonomique et adaptée à l'environnement.

Corrélativement, on a vu naître, sur le marché, des CED et stations fixes capables de communiquer entre eux grâce à des réseaux locaux de communication radio (Bluetooth, Wifi, USB radio...) ou filaires (USB pour « universal serial bus »).

A titre d'exemple, il existe actuellement entre des téléphones mobiles GSM (« global system mobile ») et des bases téléphoniques fixes DECT des moyens d'échanges permettant à l'utilisateur de ne contracter qu'un abonnement, le mobile étant opérationnel hors du domicile et le téléphone fixe se substituant au mobile quand le porteur du mobile se trouve au domicile.

De même, il existe des véhicules automobiles dont l'habitacle est équipé d'un dispositif téléphonique à la fois autonome et susceptible d'être utilisé en combinaison avec le téléphone mobile du conducteur ou de l'un de ses passagers.

Quand le porteur du téléphone mobile se trouve à proximité du téléphone fixe du véhicule, ce dernier détecte le téléphone mobile, en reçoit les coordonnées d'abonné (contenu de la carte SIM) qu'il exploite directement, avec le bénéfice d'utiliser son IHM adapté à l'environnement de l'habitacle et à la conduite du véhicule.

Mais bien que tous les services offerts par l'opérateur GSM du téléphone mobile (téléphonie mobile, navigation Internet, renseignements de voyage et de météorologie, diffusion multimédia, etc ...) soient accessibles par le téléphone de l'habitacle, ce dernier est incapable de les exploiter.

Autrement dit, l'interface homme machine du dispositif hôte, ici le téléphone de bord du véhicule, n'est utilisable que pour un seul service, le service téléphonique. Il ne peut non plus être adapté à une quelconque évolution technologique des services du réseau téléphonique, dont on connaît la prolifération galopante. Il ne peut non plus être adapté à d'autres services sans adaptation complexe et onéreuse.

En résumé, les dispositifs interfaces hôtes, du type ci-dessus, étant très spécifiques et propriétaires, ils souffrent d'une absence d'adaptabilité aux services et une pérennité technologique très faible. En un mot, ils ne sont pas universels, et deviennent très rapidement dépassés.

Il est déjà connu du document WO 2006/063602 un système pour utiliser un terminal mobile dans un véhicule automobile. Ce système permet de télécharger un programme d'intégration de logiciel afin de communiquer avec un logiciel du terminal mobile via l'écran d'affichage et les moyens de commande du véhicule automobile. Il est précisé dans ce document que le programme d'intégration de logiciel permet de télécharger le logiciel du terminal mobile dans le véhicule. Ce logiciel est donc par la suite intégré dans l'architecture du véhicule. Un tel système va cependant à l'encontre du but recherché dans la présente demande car l'intégration d'un nouveau logiciel entraîne des risques de détérioration de la sécurité de fonctionnement du système embarque dans le véhicule.

La demanderesse a recherché à pallier ce manque d'adaptabilité et de pérennité des systèmes hôtes.

A cet effet, l'invention concerne tout d'abord un procédé d'exploitation d'au moins un service exploitable dans un appareil électronique mobile, le dit appareil électronique étant disposé dans un environnement comprenant un système hôte à interface homme - machine adapté à l'environnement pour exploiter le service, procédé dans lequel:
- on met en communication l'appareil mobile et le système hôte qui détecte la capacité d'exploitation du service par l'appareil mobile.

Selon l'invention le procédé est caractérisé par le fait que, en réponse à la dite détection:
- on télécharge dans le système hôte un proxy d'exploitation du service et on déporte l'exploitation du service sur le système hôte par l'intermédiaire de son interface homme machine et
- pour exploiter le service depuis le système hôte, on télécharge aussi un logiciel de définition des caractéristiques de présentation des informations sur l'interface homme - machine du système hôte.

Ainsi, l'IHM conviviale et adaptée à l'environnement considéré est associée à l'intelligence de l'appareil mobile (CED) grâce au proxy, qui est un moyen de traitement logiciel tampon de proche voisinage servant de mandataire au CED pour la transmission de requêtes.

L'invention a consisté non pas à augmenter les capacités de traitement ou d'intelligence du système de l'utilisateur, comme il eut été ordinaire de faire pour s'adapter mieux et plus complètement aux différents dispositifs technologiques et services disponibles, mais au contraire à vider le système de ses propres fonctions de traitement pour le réduire à une interface homme machine hôte universelle (IHMH) grâce à au moins un moyen mandataire.

Ainsi, l'invention propose d'adapter la convivialité de l'IHMH à la puissance de traitement des CED.

Dans une mise en oeuvre particulière du procédé de l'invention, le service est un service offert par un opérateur et seulement exploitable par l'appareil mobile, par exemple un service de guidage.

Dans une autre mise en oeuvre du procédé de l'invention, le service est un service direct de l'appareil mobile, par exemple un service de dictionnaire (on dit alors que l'appareil mobile est un appareil isolé « stand alone »).

Le proxy d'exploitation du service peut être téléchargé de l'appareil mobile d'exploitation du service ou d'un serveur.

L'invention concerne également un système hôte à interface homme machine pour la mise en oeuvre du procédé de l'invention, comprenant des moyens de reproduction d'informations et des moyens de commande pour un utilisateur, système caractérisé par le fait qu'il comprend aussi au moins un processeur de communication, une mémoire de stockage d'un logiciel proxy d'exploitation de service et un microcontrôleur / processeur de mise en oeuvre du logiciel proxy.

Dans la forme de réalisation préférée du système hôte de l'invention, il est prévu au moins l'un des composants de l'ensemble comprenant une mémoire de masse, une unité opérationnelle (CPU), un contrôleur graphique, un élément de commande vocale (micro, haut parleur), un contrôleur de bus « véhicule » ( CAN, MOST).

De préférence, le système hôte comporte un logiciel de concentrateur média (media hub) agencé pour le téléchargement, le stockage et la mise en oeuvre du logiciel proxy.

Grâce à l'invention, dans l'exemple des véhicules, l'appareil mobile, qui n'a pas besoin d'être monté mécaniquement selon une ergonomie liée à son utilisation, il est possible d'utiliser l'écran de bord du véhicule, c'est-à-dire l'écran du système hôte, qui est de taille appropriée, et les interfaces prévues dans l'habitacle, intégrant notamment des haut parleurs de qualité et des boutons de commande sur le volant, ce qui améliore la sécurité.

En outre, dans ce même exemple des véhicules, on peut prévoir des échanges de données entre l'appareil ou l'opérateur du service et le calculateur de bord du véhicule, par exemple encore pour l'envoi de données de test moteur à une station de dépannage.

D'autres caractéristiques et avantages de la présente invention apparaîtront plus clairement à la lecture de la description ci-après du procédé, du système hôte d'exploitation de service, selon l'invention, et d'un ensemble du système et d'un appareil électronique mobile d'exploitation de service, faite en référence au dessin annexé sur lequel :
- la figure 1 est un schéma par blocs fonctionnels de l'ensemble du système hôte d'exploitation de service et d'un appareil électronique mobile, et
- la figure 2 est un organigramme montrant les étapes du procédé de l'invention.

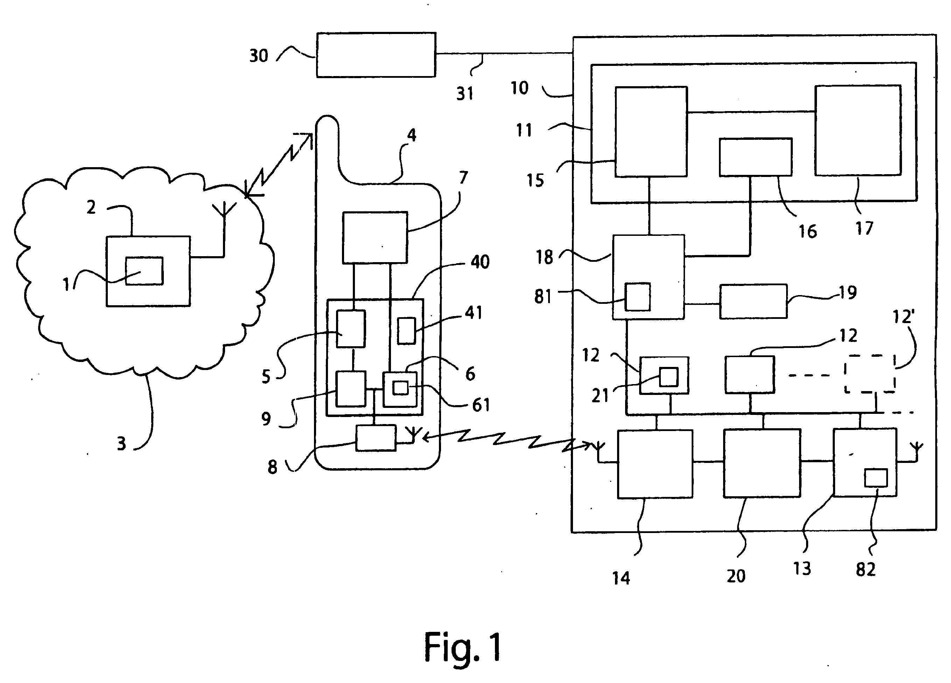

En référence à la figure 1, un service prédéterminé, illustré par le bloc 1, est offert, selon une première mise en oeuvre, par un centre opérateur 2 sur le Web 3. Un appareil électronique mobile CED 4, ici un téléphone mobile GSM, y a accès par son navigateur internet 5 et peut l'exploiter classiquement notamment par le navigateur 5, une application 9 de traitement du service 1 ou de traitement d'un service direct 9.

Le service 1 peut par exemple être un service de réservation, de renseignements touristiques ou météorologiques, de navigation automobile ou encore un service de navigation ou de courrier électronique sur Internet. Mais cette liste n'est pas exhaustive.

Une autre mise en oeuvre, similaire à celle ci-dessus, n'en diffère qu'en ce que le service 1 est remplacé par un service direct 9, c'est-à-dire un service présent exclusivement dans l'appareil 4, par exemple une application 9. Dans la suite, la référence 9 représente aussi bien une application qu'un service.

L'application 9 peut par exemple être une application d'agenda électronique, de dictionnaire, de comptabilité, ou autre.

Quelle que soit la mise en oeuvre, l'application 9 de l'appareil portable 4 est reliée à un éditeur 6 et à une IHM 7, agencés pour mettre en forme et reproduire les informations à un utilisateur de l'appareil 4. L'IHM 7 comporte de manière classique un écran et un clavier (non repérés).

Le téléphone mobile 4 comporte un port radio locale ici Bluetooth 8, relié à l'éditeur 6, qui est agencé pour transmettre et recevoir des données au port radio 8 aussi bien qu'à l'IHM 7, comme il sera décrit plus loin.

Par ailleurs, et ici dans l'habitacle d'un véhicule (non représenté), est prévue un système hôte 10 d'exploitation du même service 1 ou 9 grâce à son IHM 11 adapté à l'habitacle et restant à demeure dans cet habitacle.

L'habitacle d'un véhicule n'est considéré qu'à titre d'exemple ; on aurait pu aussi parler d'un domicile.

Le système hôte 10 et le téléphone 4 forment un ensemble d'exploitation de service comportant au moins un appareil électronique mobile d'exploitation de service avec une interface homme - machine, un système hôte dans un environnement externe à l'appareil mobile avec une interface homme - machine.

Ici, le système 10 est une interface homme machine hôte universelle (IHMH). Les ressources 5, 9, 6 du téléphone 4 sont des logiciels implantés dans une unité de calcul 40 du CED 4.

L'IHMH 10 détecte les émissions Bluetooth du CED 4, ou inversement, par polling (connu de l'homme du métier) grâce à la présence d'un processeur Bluetooth 14. Un échange de trames initiales permet à l'IHMH 10 de connaître le service 1 ou 9 exploitable par le CED 4.

Pour exploiter le service 1 ou 9, un passager ou le conducteur du véhicule propriétaire du téléphone 4 peut soit utiliser son téléphone 4, et subir les inconvénients décrits plus haut, soit, si il est opérationnel, utiliser le système ou IHMH 10, avec tous les avantages également décrits ci-dessus.

Dans ce dernier cas, en effet, simultanément, le téléphone mobile 4 exploite le service 1 par les ressources 5, 9 et 6 comme s'il était exploité, contrôlé et commandé par sa propre IHM 7, mais c'est par l'IHM 11 de l'IHMH 10 via la liaison Bluetooth entre le port 8 et le processeur 14 que cette exploitation et ce contrôle / commande sont effectués. L'IHM du téléphone 4 est déporté sur le système hôte 10.

L'ensemble d'exploitation de service comporte ainsi en outre des moyens agencés pour déporter l'exploitation de l'interface homme - machine de l'appareil sur l'interface homme - machine du système hôte, ce dernier étant agencé pour détecter la présence de l'appareil mobile et sa capacité d'exploitation d'un service.

Cela est rendu possible grâce à la présence dans l'IHMH 10 d'un proxy 12 de l'application 9 ou du service 1.

L'homme du métier connaît le principe de fonctionnement des modèles logiciels proxies. Ces logiciels ont des fonctions de représentation, de mandataire, et ils sont codés pour un environnement déterminé, ici l'environnement de l'IHM 11, pour un service 1 déterminé et indépendamment des caractéristiques du CED 4.

Le processeur 14 détecte et reçoit les signaux Bluetooth émis par le port 8 du téléphone 4 et les transmet au proxy 12. Ces signaux fournissent, par exemple, à l'interface 11 des données conformes RSS («Really Simple Syndication» ou « Rich Site Summary» ou « RDF Site Summary ») ou autres données du même type, comme expliquées ci-dessous.

Le « RSS » d'un site Internet est un résumé du site représentant le cadrage de ses ressources informatiques. Il constitue un standard pouvant rassembler les informations de différentes applications du type de l'application 9 et permettre un affichage ou une reproduction personnalisée, ici sur l'IHM 11, des informations reçues par l'utilisateur.

Les données RSS sont ici reçues dans un concentrateur « média » 13 (media hub), qui contient un logiciel de lecture RSS de définition de caractéristiques de présentation d'informations.

On rappelle que 'RSS' désigne une famille de protocoles de syndication de contenu sur Internet, à base de technologie XML (« extensible markup language ») utilisés principalement par les sites d'actualités, les weblogs et les podcasts. La mise en oeuvre de procédures RSS est bien connue de l'homme du métier, soit via un modem (non représenté) du téléphone 4, soit par le proxy 12 correspondant à un lecteur RSS 61 ici inclus dans l'éditeur 6 mais pouvant être inclus dans l'application 9 du téléphone 4 selon l'application, et 21 inclus dans le proxy 12.

Ordinairement un concentrateur est un élément matériel permettant de récupérer des données binaires (ici des données RSS) sur un port, de les régénérer et de les rediffuser sur plusieurs ports en opérant sur la première couche OSI (« open system interconnection »).

On comprendra que l'utilisation de cette technologie d'échanges RSS permet le traitement, par le concentrateur 13 et l'IHMH 10, de plusieurs services différents 1 et de plusieurs applications différentes 9 du téléphone 4 pour être exploitées selon les souhaits de l'utilisateur, pourvu que ces applications 9 ou services 1 appartiennent à l'ensemble des applications utilisant les protocoles RSS.

En ce qui concerne les autres applications 9 incompatibles aux protocoles RSS, par exemple le traitement du courrier électronique ou de la navigation Internet, un autre proxy 12, ou un autre moyen désigné ci-dessous, est nécessaire dans l'IHMH 10 pour assurer les mêmes fonctions de l'IHM 11 et conjointement un logiciel 61 similaire au lecteur RSS est nécessaire dans le téléphone 4.

Ici le concentrateur 13 a des fonctions bien plus étendues qu'un concentrateur ordinaire. Avant la concentration des caractéristiques RSS de l'interface homme - machine adaptées à l'environnement de l'IHMH 10, de l'application 9 du service 1, il en commande le téléchargement. Il les télécharge à partir du CED 4 ou du centre 2 de l'opérateur dans l'IHMH 10, grâce à des moyens de téléchargement 82, pour les reproduire sur l'IHM 11.

Le concentrateur 13 est encore chargé de sélectionner le proxy 12 qui est nécessaire pour le service demandé 1 et de le lancer quand il faut, s'il est présent (sinon il provoque son téléchargement, comme on le verra plus loin, en commandant des moyens de téléchargement).

De préférence le concentrateur 13 est du type SPP, de façon à détecter lui-même la présence de l'appareil mobile 4. C'est alors lui qui détecte aussi les émissions Bluetooth et lance les proxies 12.

Le concentrateur 13 peut même éventuellement remplacer le proxy 12, par exemple pour la transmission des courriers électroniques.

L'IHMH 10 comporte enfin les couches 20 (ou « stacks ») OSI de communication Bluetooth nécessaires aux proxies 12 et au concentrateur 13.

L'IHM 11 comporte enfin un clavier de commande 16 (ou une commande vocale comportant micro et haut parleur) et un contrôleur graphique 15 pour pouvoir reproduire des informations sur un écran 17 et exercer le contrôle - commande du service 1. Optionnellement, une unité opérationnelle 18, ou un microcontrôleur 18, et une mémoire de masse 19 permettent d'assurer la gestion de l'ensemble.

Tous les moyens fonctionnels 12, 13, 15, 18, 20 ci-dessus peuvent de préférence être programmés sur des processeurs (chips) séparés.

Selon un premier mode de mise en oeuvre, chaque proxy 12 est préalablement installé dans l'IHMH 10 et le concentrateur 13 est initialisé pour le solliciter lors de l'utilisation. Si le proxy 12 est implémenté sur un processeur, ce processeur est intégré à l'IHMH 10.

Selon un second mode de mise en oeuvre, seuls les emplacements 12' des proxies 12 sont prévus et réservés. Lorsqu'un proxy 12 devient nécessaire pour l'exploitation du service 1, il est téléchargé dans l'IHM 10 à partir d'un serveur de téléchargement 30 qui peut être inclus dans le centre 2 de l'opérateur de service 1 lui-même via le CED 4. Mais le serveur de téléchargement 30 peut être indépendant et relié au CED 4 de façon classique (USB ou autre) par un réseau local 31 ou une liaison informatique directe 31.

Pour permettre le téléchargement des proxies 12, ont été prévues des fonctions 41 et 81 de téléchargement de proxy respectivement situées dans les microcontrôleurs 40 et 18. Mais on peut aussi utiliser les moyens de téléchargement 82 prévus dans le concentrateur 13.

Le proxy 12 est téléchargé par la fonction 81 ou 82 dans un processeur vide 12' initialement prévu à cet effet dans l'IHMH 10. Corrélativement, le concentrateur 13 est initialement prévu pour comporter les liens logiques qui lui permettra d'activer le proxy 12 lorsque il sera téléchargé.

Selon ce second mode de mise en oeuvre, l'IHMH 10 peut ne contenir aucun proxy 12 mais seulement les emplacements réservés 12' , et, lors de son utilisation, le concentrateur 13, détectant un téléphone 4 par liaison Bluetooth et détectant, dans les trames initiales des échanges Bluetooth, une nécessité de téléchargement de proxy 12, lance la fonction de téléchargement 81 ou 82 du proxy dans l'emplacement réservé 12' d'adresse prédéterminée ou calculable et mémorise cette adresse accompagnée des caractéristiques du proxy téléchargé 12 de façon à pouvoir en effectuer le lancement. L'ensemble d'exploitation de service comporte ainsi en outre un serveur de téléchargement de proxy.

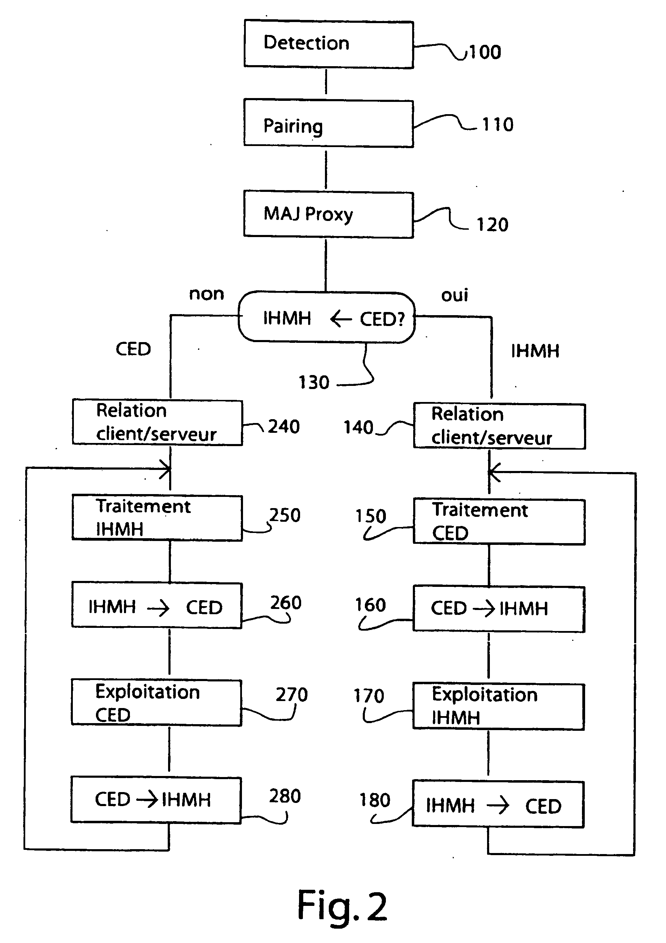

Le fonctionnement global du système composé du centre 2 opérateur du service 1, du téléphone 4 et du système hôte IHMH 10 va maintenant être expliqué, en référence à la figure 2.

Quand un utilisateur porteur du téléphone 4 se trouve dans une zone Bluetooth de l'IHMH 10, lors d'une étape 100, le proxy 12 ou le concentrateur 13 détecte la présence du téléphone 4 soit par déclenchement volontaire, soit par polling ou sondage périodique.

A une étape 110, les deux dispositifs 4 et 10 effectuent une opération de couplage Bluetooth (« pairing »), par échange de trames initiales classique (par exemple type SPP).

Dans les trames initiales échangées, à une étape 120, le téléphone 4 propose le service 1 dont il dispose au concentrateur 13, par exemple d'un des services qui ont été évoqués ci-dessus. Cette opération peut être bidirectionnelle et provoquer immédiatement des téléchargements de proxies 12, comme on l'a vu ci-dessus.

L'utilisateur a alors, à une étape 130, le choix d'utiliser son téléphone 4 et son interface 7 ou l'IHMH 10 et son interface 11.

S'il préfère cette dernière solution, il lui suffit d'utiliser les commandes de l'interface 11. Sa requête déclenche alors une étape 140 qui déporte l'exploitation du service 1 sur le système hôte 10 par l'intermédiaire de son interface homme machine 11.

Pour cela, le concentrateur 13 sélectionne le bon proxy 12, et par suite la bonne application 9, permettant une mise en relation du type client /serveur entre l'IHMH 10 et le CED 4 incluant le logiciel RSS de définition des caractéristiques de présentation des informations sur l'interface homme - machine.

Plus précisément, le concentrateur 13 sélectionne le proxy 12 correspondant à la requête introduite sur l'IHM 11 et le proxy 12 transmet cette requête à l'éditeur 6 qui reconnaît l'application 9 correspondant au proxy 12 et qui la lui transmet.

Si à cet instant le proxy 12 est encore absent, le concentrateur 13 provoque préalablement son téléchargement, ainsi que les données RSS (ou équivalent) dont a besoin, grâce à la fonction 82 (ou le microcontrôleur 18 par sa fonction 81) à partir du CED 4 dans un emplacement réservé 12 avant de lui céder le contrôle.

L'application 9 traite alors, à une étape 150, le service 1, selon la requête, et à une étape 160, retransmet les résultats ou les requêtes du service 1 vers l'IHM 11 par le même canal Bluetooth et le même proxy 12.

A une étape 170, l'IHM 11 affiche ou émet selon le cas les résultats ou les requêtes du service 1 et peut solliciter à une étape suivante 180 l'expression d'une nouvelle requête utilisateur et provoquer l'exécution d'une nouvelle étape 150. Et ainsi de suite.

On voit que, simultanément, on traite le service 1 dans l'appareil électronique mobile 4 par l'application 9 et, pour en bénéficier, on exploite l'interface homme machine 11 de l'IHMH 10 grâce à un proxy 12.

Inversement, si l'utilisateur préfère utiliser son téléphone 4, on peut prévoir qu'il lui suffise d'utiliser les commandes de l'interface 7. Il déclenche alors, lors d'une étape 240, une relation client / serveur inverse de la précédente pourvu que le téléphone 4 présente une structure symétrique de celle de l'IHMH 10. Des étapes suivantes 250 à 280 symétriques des étapes 150 à 180 ci-dessus se déroulent ensuite.

Ainsi, et pour reprendre un exemple déjà évoqué, en utilisant un concentrateur bidirectionnel relié au bus informatique du véhicule, on peut provoquer des échanges de données entre le calculateur de bord du véhicule et un service de dépannage via le CED 4.

On voit que, simultanément, on traite les équipements de test intégré BITE («built-in test equipment») dans l'IHMH 10 par son microcontrôleur 18 et, pour émettre le message contenant les résultats de test temps réel vers un service de dépannage, on exploite l'interface homme machine 7 et le navigateur 5 du CED 4 grâce à une application 9 d'émission de courrier électronique.

## Revendications

1. Procédé d'exploitation d'au moins un service (1) exploitable dans un appareil électronique mobile (4), le dit appareil électronique étant disposé dans un environnement comprenant un système hôte (10) à interface homme - machine (11) adapté à l'environnement pour exploiter le service, procédé dans lequel:
- on met en communication l'appareil mobile (4) et le système hôte (10) qui détecte la capacité d'exploitation du service (1) par l'appareil mobile (4),
le dit procédé étant **caractérisé par le fait que**, en réponse à la dite détection:
- on télécharge (81, 82) dans le système hôte (10) un proxy (12) d'exploitation du service (1) et on déporte (130) l'exploitation du service (1) sur le système hôte (10) par l'intermédiaire de son interface homme - machine (11) et
- pour exploiter le service (1, 9) depuis le système hôte (10), on télécharge aussi (140) un logiciel de définition des caractéristiques de présentation des informations sur l'interface homme - machine (11) du système hôte (10).

2. Procédé selon la revendication 1, dans lequel le service est un service direct (9) présent exclusivement dans l'appareil mobile (4).

3. Procédé selon la revendication 1, dans lequel le service (1) est un service offert par un opérateur (1, 2) et initialement seulement exploitable par l'appareil mobile (4).

4. Procédé selon l'une des revendications 1 à 3, dans lequel le proxy (12) d'exploitation du service (1, 9) est téléchargé (140; 81, 82) de l'appareil mobile (4) d'exploitation du service (1).

5. Procédé selon l'une des revendications 1 à 3, dans lequel le proxy d'exploitation du service (1) est téléchargé d'un serveur (30).

6. Système hôte (10) à interface (11) homme - machine pour la mise en oeuvre du procédé selon les revendications 1 à 5, comprenant des moyens de reproduction d'informations (15) et des moyens de commande (16) pour un utilisateur, au moins un processeur de communication (14), une mémoire (12') de stockage d'un logiciel proxy (12) d'exploitation de service (1, 9) et un processeur (13) de mise en oeuvre du logiciel proxy (12).

7. Système selon la revendication 6, dans lequel il est prévu au moins l'un des composants de l'ensemble comprenant une mémoire de masse (19), une unité opérationnelle (18), un contrôleur graphique (15), un élément de commande vocale (16), un contrôleur de bus véhicule.

8. Système selon l'une des revendications 6 et 7, comportant un logiciel de concentrateur média (13) agencé pour le téléchargement (82), le stockage (12') et la mise en oeuvre du logiciel proxy (12).

## Claims

1. Method for operating at least one service (1) that can be operated in a mobile electronic apparatus (4), said electronic apparatus being arranged in an environment comprising a host system (10) with human-machine interface (11) suited to the environment for operating the service, a method in which:
- a connection is set up between the mobile apparatus (4) and the host system (10) which detects the capacity to operate the service (1) by the mobile apparatus (4),
said method being **characterized in that**, in response to said detection:
- a proxy (12) to operate the service (1) is downloaded (81, 82) to the host system (10) and the operation of the service (1) is transferred (130) to the host system (10) via its human-machine interface (11) and
- to operate the service (1, 9) from the host system (10), software for defining the information presentation characteristics on the human-machine interface (11) of the host system (10) is also downloaded (140).

2. Method according to Claim 1, in which the service is a direct service (9) present exclusively in the mobile apparatus (4).

3. Method according to Claim 1, in which the service (1) is a service offered by an operator (1, 2) and which initially can only be operated by the mobile apparatus (4).

4. Method according to one of Claims 1 to 3, in which the proxy (12) for operating the service (1, 9) is downloaded (140; 81, 82) from the mobile apparatus (4) for operating the service (1).

5. Method according to one of Claims 1 to 3, in which the proxy for operating the service (1) is downloaded from a server (30).

6. Host system (10) with human-machine interface (11) for implementing the method according to Claims 1 to 5, comprising information reproduction means (15) and control means (16) for a user, at least one communication processor (14), a memory (12') for storing proxy software (12) for operating a service (1, 9) and a processor (13) for implementing the proxy software (12).

7. System according to Claim 6, in which there is provided at least one of the components of the assembly comprising a mass memory (19), an operational unit (18), a graphics controller (15), a voice control element (16), a vehicle bus controller.

8. System according to either of Claims 6 and 7, comprising media concentrator software (13) arranged for the downloading (82), the storage (12') and the implementation of the proxy software (12).

## Patentansprüche

1. Verfahren zur Nutzung mindestens eines Dienstes (1), der in einem mobilen elektronischen Gerät (4) benutzt werden kann, wobei das elektronische Gerät in einer Umgebung angeordnet ist, welche ein Hostsystem (10) mit einer zur Nutzung des Dienstes an die Umgebung angepassten Mensch-Maschine-Schnittstelle (11) umfasst, wobei in dem Verfahren:
- das mobile Gerät (4) mit dem Hostsystem (10) in Kommunikation versetzt wird, welches die Fähigkeit zur Nutzung des Dienstes (1) durch das mobile Gerät (4) entdeckt,
wobei das Verfahren durch die Tatsache gekennzeichnet ist, dass in Reaktion auf diese Ortung
- in dem Hostsystem (10) ein Proxy (12) zur Nutzung des Dienstes (1) heruntergeladen (81, 82) wird und die Nutzung des Dienstes (1) mittels seiner Mensch-Maschine-Schnittstelle (11) auf das Hostsystem (10) verlagert (130) wird, und
- zur Nutzung des Dienstes (1, 19) von dem Hostsystem (10) aus auch eine Definitionssoftware der Darstellungsmerkmale der Informationen auf der Mensch-Maschine-Schnittstelle (11) des Hostsystems heruntergeladen (140) wird.

2. Verfahren gemäß Anspruch 1, wobei der Dienst ein ausschließlich in dem mobilen Gerät (4) vorhandener direkter Dienst (9) ist.

3. Verfahren gemäß Anspruch 1, wobei der Dienst (1) ein von einem Provider (1, 2) angebotener Dienst ist und ursprünglich nur von dem mobilen Gerät (4) genutzt werden kann.

4. Verfahren gemäß einem der Ansprüche 1 bis 3, wobei der Proxy (12) zur Nutzung des Dienstes (1, 9) von dem mobilen Gerät (4) zur Nutzung des Dienstes (1) heruntergeladen (140; 81, 82) wird.

5. Verfahren gemäß einem der Ansprüche 1 bis 3, wobei der Proxy (12) zur Nutzung des Dienstes (1) von einem Server (30) heruntergeladen wird.

6. Hostsystem (10) mit Mensch-Maschine-Schnittstelle (11) zur Ausführung des Verfahrens gemäß den Ansprüchen 1 bis 5, umfassend Mittel zur Wiedergabe von Informationen (15) und Bedienmittel (16) für einen Benutzer, mindestens einen Kommunikationsprozessor (14), einen Speicher (12) zum Speichern einer Proxysoftware (12) zur Nutzung des Dienstes (1, 9) und einen Prozessor zur Ausführung der Proxysoftware (12) umfasst.

7. System gemäß den Anspruch 6, wobei mindestens einer der Bestandteile der Kombination umfassend einen Massenspeicher (19), eine Betriebseinheit (18), einen Graphik-Controller (15), ein Element zur Sprachbedienung (16) und einen Fahrzeugbus-Controller vorgesehen ist.

8. System gemäß einem der Ansprüche 6 und 7, umfassend eine Medienhubsoftware (13), die für das Herunterladen (82), das Speichern (12) und die Ausführung der Proxysoftware (12) eingerichtet ist.
